# EUROPÄISCHE PATENTANMELDUNG

(11) **EP 4 682 580 A1**
(43) Veröffentlichungstag der Anmeldung: **21.01.2026**
(21) Anmeldenummer: 25186268.6
(22) Anmeldetag: 30.06.2025
(51) Int. Cl.: G01S 7/481, G01S 17/48

(54) **OPTOELEKTRISCHER SENSOR ZUM ERFASSEN VON OBJEKTEN**

(30) Priorität: 15.07.2024 DE 102024120140
(71) Anmelder: Baumer Electric AG, 8500 Frauenfeld (CH)
(72) Erfinder: Clad, Marius, 8274 Gottlieben (CH); Lerchner, Henry, 9507 Stettfurt (CH)
(74) Vertreter: Strauss, Steffen

(57) **Zusammenfassung**

Die vorliegende Erfindung betrifft einen Optoelektrischer Sensor zum Erfassen von Objekten in einem Erfassungsbereich, aufweisend Lichtsendemittel, die so ausgebildet sind, dass Lichtsignale entlang eines Sendelichtpfads auf den Erfassungsbereich ausgesendet werden können; Lichtempfangsmittel, die so ausgebildet sind, dass an einem Objekt im Erfassungsbereich reflektierte und sich entlang eines Empfangslichtpfads ausbreitende Lichtsignale erfassbar sind; ein Sensorgehäuse, das einen Innenraum zum Aufnehmen der Lichtsendemittel und der Lichtempfangsmittel in einem Auslieferzustand ausbildet, wobei das Sensorgehäuse eine Aufnahme für ein Befestigungselement umfasst, um den optoelektrischen Sensor in einem Betriebszustand an einem externen Körper festzulegen.

Erfindungsgemäß umfasst der Sensor im Auslieferzustand eine im Innenraum angeordnete Trägereinheit zum Aufnehmen und Ausrichten der Lichtsendemittel und der Lichtempfangsmittel, wobei die gehäuseseitige Aufnahme als ein den Innenraum vollständig durchdringender hülsenförmiger Rohrabschnitt ausgebildet ist, die Trägereinheit einen umfangsseitig geschlossenen Durchbruch umfasst und im Betriebszustand der Rohrabschnitt innerhalb des Durchbruchs angeordnet ist, um das Befestigungselement innerhalb des Durchbruchs und des Rohrabschnitts anzuordnen.

## Beschreibung

Die vorliegende Erfindung betrifft einen optoelektrischen Sensor zum Erfassen von Objekten in einem Erfassungsbereich nach Anspruch 1.

Optoelektrische Sensoren zum Erfassen von Objekten sind aus dem Stand der Technik allgemein bekannt.

Die bekannten optoelektrischen Sensoren senden Lichtsignale entlang eines Sendelichtpfads auf einen Erfassungsbereich aus.

An Objekten, die sich im Erfassungsbereich befinden, werden die ausgesendeten Lichtsignale reflektiert. Ein Teil der reflektierten Lichtsignale trifft wieder auf den Sensor. Zum Erfassen der reflektierten Lichtsignale umfasst der Sensor Lichterfassungsmittel. Somit kann die Anwesenheit von Objekten innerhalb des Erfassungsbereichs erkannt werden. Ferner ist es auch bekannt, dass der Einfallswinkel der reflektierten Lichtsignale ermittelt wird, um daraus den Abstand des Objekts vom Sensor zu bestimmen.

Bekannte optoelektrische Sensoren umfassen ein Sensorgehäuse zum Aufnehmen und Ausrichten der Lichtsendemittel und der Lichtempfangsmittel. Zum Festlegen des Sensors an einem externen Körper umfasst das Sensorgehäuse in einem Randabschnitt eine Aufnahme zum Aufnehmen eines Befestigungselements, um den Sensor am externen Körper zu fixieren und auf den Erfassungsbereich auszurichten.

Ein Sensorgehäuse aus Kunststoff lässt sich im Vergleich zu einem Sensorgehäuse aus Metall zwar kostengünstiger herstellen, besitzt jedoch größere Messtoleranzen, da sich das Gehäuse bei Temperaturänderungen aufgrund größerer thermischer Wärmekoeffizienten des Kunststoffs stärker ausdehnt. Dies beeinflusst die relative Position der Lichtsendemittel und der Lichtempfangsmittel, was sich negativ auf das Messergebnis auswirkt.

Der vorliegenden Erfindung liegt daher die Aufgabe zugrunde, die aus dem Stand der Technik bekannten Nachteile zu überwinden. Insbesondere ist es die Aufgabe der vorliegenden Erfindung einen optoelektrischen Sensor anzugeben, bei dem sich eine Temperaturänderung und die damit verbundene thermische Ausdehnung des Sensorgehäuses nicht negativ auf das Messergebnis des optoelektrischen Sensors auswirkt.

Die Aufgabe wird durch einen erfindungsgemäßen optoelektrischen Sensor gemäß Anspruch 1 gelöst.

Vorteilhafte Weiterbildungen der Erfindung sind in den Unteransprüchen beschrieben. In den Rahmen der vorliegenden Erfindung fallen sämtliche Kombinationen aus zumindest zwei von in der Beschreibung, den Ansprüchen und/oder den Figuren offenbarten Merkmalen.

Der erfindungsgemäße optoelektrische Sensor ist zum Erfassen von Objekten in einem Erfassungsbereich ausgebildet. Bei dem erfindungsgemäßen optoelektrischen Sensor handelt es sich bevorzugt um einen Triangulationssensor.

Der erfindungsgemäße optoelektrische Sensor umfasst Lichtsendemittel, die so ausgebildet sind, dass Lichtsignale entlang eines Sendelichtpfads auf den Erfassungsbereich ausgesendet werden können.

Ferner umfasst der erfindungsgemäße optoelektrische Sensor Lichtempfangsmittel, die so ausgebildet sind, dass an einem Objekt im Erfassungsbereich reflektierte und sich entlang eines Empfangslichtpfads ausbreitende Lichtsignale erfasst und/oder detektiert werden können.

Innerhalb des Erfassungsbereichs kann sich das zu detektierende Objekt an unterschiedlichen Positionen befinden. Für die Vielzahl der möglichen Positionen ergibt sich bei einem gleichbleibenden und/oder identischen Sendelichtpfad stets ein individueller Empfangslichtpfad. Ferner wird darauf hingewiesen, dass sich der Sendelichtpfad vom Empfangslichtpfad unterscheidet und/oder dass die Position der Lichtsendemittel im Sensorgehäuse von der Position der Lichtempfangsmittel abweicht.

Der erfindungsgemäße optoelektrische Sensor umfasst ferner ein Sensorgehäuse, das einen Innenraum zum Aufnehmen der Lichtsendemittel und der Lichtempfangsmittel in einem Auslieferzustand ausbildet, wobei das Sensorgehäuse eine Aufnahme für ein Befestigungselement umfasst, um den optoelektrischen Sensor in einem Betriebszustand an einem externen Körper festzulegen.

Ferner umfasst der erfindungsgemäße optoelektrische Sensor eine im Auslieferzustand im Innenraum des Sensorgehäuses angeordnete Trägereinheit.

Die Trägereinheit ist so ausgebildet, dass die Lichtsendemittel und die Lichtempfangsmittel nicht nur aufgenommen und gehalten, sondern auch ausgerichtet und somit zueinander relativpositioniert sind. Ferner ist die Trägereinheit so ausgebildet, dass die Lichtsendemittel von den Lichtempfangsmitteln beabstandet ausgerichtet und gehalten sind. Dieser Abstand, der senkrecht zum Sendelichtpfad gemessen wird, wird im Rahmen der vorliegenden Erfindung als Basisabstand bezeichnet.

Zudem ist es bei dem erfindungsgemäßen optoelektrischen Sensor vorgesehen, dass die gehäuseseitige Aufnahme als ein den Innenraum vollständig durchdringender hülsenförmiger Rohrabschnitt ausgebildet ist und dass die Trägereinheit einen umfangsseitig geschlossenen Durchbruch umfasst, wobei sich im Betriebszustand der Rohrabschnitt innerhalb des Durchbruchs befindet. Das Befestigungselement, das zum Festlegen des Sensors an einem externen Körper vorgesehen ist, kann somit in den vom Rohrabschnitt ausgebildeten Hohlraum eingeführt werden und ist somit innerhalb des Rohrabschnitts sowie des Durchbruchs angeordnet.

Der erfindungsgemäße Rohrabschnitt durchsetzt und/oder durchdringt das Sensorgehäuse, insbesondere in Bezug auf eine Tiefenerstreckung des Sensorgehäuses, vollständig.

Anders ausgedrückt, im Betriebszustand befindet sich der Rohrabschnitt des Sensorgehäuses innerhalb des Durchbruchs der Trägereinheit und das Befestigungselement befindet sich innerhalb des Rohrabschnitts. Der Rohrabschnitt ist somit im Betriebszustand um das längliche Befestigungselement ausgebildet und die Trägereinheit ist um den Rohrabschnitt ausgebildet. Mit anderen Worten, die freie Öffnung des Rohrabschnitts ist zum Aufnehmen des Befestigungselements ausgebildet, um den optoelektrischen Sensor im Betriebszustand an einem externen Körper festzulegen.

Das Sensorgehäuse, das den hülsenförmigen Rohrabschnitt umfasst und/oder ausbildet, ist insbesondere einstückig und/oder monolithisch ausgebildet.

Die Trägereinheit, die den umfangsseitig geschlossenen Durchbruch umfasst und/oder ausbildet, ist insbesondere einstückig und/oder monolithisch ausgebildet.

Durch das Einführen eines Befestigungselements, insbesondere eines länglichen Befestigungselements, in die innere Öffnung des Rohrabschnitts kann zum einen der Rohrabschnitt und somit das Sensorgehäuse sowie zum anderen die Trägereinheit und somit die Lichtsende- und Empfangsmittel am externen Körper festgelegt werden, derart, dass sich eine thermische Ausdehnung des Sensorgehäuses nicht auf die Relativposition der Lichtsende- und der Lichtempfangsmittel negativ auswirkt.

Die vorliegende Erfindung schafft somit eine thermische Entkopplung zwischen dem Sensorgehäuse und der Trägereinheit, da das Sensorgehäuse und die Trägereinheit durch einen gemeinsamen Befestigungspunkt am externen Körper festgelegt sind.

Von Vorteil ist hierbei, dass sich ein großer thermischer Ausdehnungskoeffizient des Sensorgehäuses nicht negativ auf das Messergebnis auswirkt, da die vorliegende Erfindung durch den gemeinsamen Befestigungspunkt eine Entkopplung zwischen dem Sensorgehäuse und der Trägereinheit und somit der Relativposition zwischen der Lichtsendemittel und der Lichtempfangsmittel schafft.

Die Trägereinheit ist dabei insbesondere so ausgestaltet, dass sich eine thermische Ausdehnung nicht negativ auf die Positionen der Lichtsende- und der Lichtempfangsmittel auswirkt.

Weiterbildend ist es vorgesehen. dass der Rohrabschnitt und/oder der Durchbruch einen im Wesentlichen kreisförmigen Querschnitt umfasst, wobei im Auslieferzustand der Rohrabschnitt und der Durchbruch zueinander koaxial ausgebildet sind.

Der umfangsseitig geschlossene Durchbruch in der Trägereinheit ist somit insbesondere als Bohrung ausgebildet. Vorteilhaft lassen sich die Herstellungskosten somit reduzieren, da sich eine Bohrung technisch einfach umsetzen lässt.

Das Befestigungselement ist bevorzugt länglich ausgebildet. Anders ausgedrückt, der hülsenförmige Rohrabschnitt und/oder der umgangsseitig geschlossene Durchbruch ist zum Einführen und Aufnehmen eines länglichen Befestigungselements ausgebildet.

Als Befestigungselement wird in diesem Zusammenhang insbesondere eine Schraube oder ein Positionierungsstift oder ein Bolzen verwendet.

Das Befestigungselement fixiert den Sensor am externen Körper. Die freie Öffnung des erfindungsgemäßen hülsenförmigen Rohrabschnitts, der innenseitig und/oder radial innen und/oder unmittelbar benachbart und/oder unmittelbar anliegend zum Durchbruch und/oder zur Bohrung positionierbar ist, kann somit eine Schraube oder ein Positionierungsstift oder ein Bolzen aufnehmen, wobei die Schraube oder der Positionierungsstift oder der Bolzen endseitig in den externen Körper ragt.

Ferner wird noch angemerkt, dass sich im Betriebszustand der Erfassungsbereich hinsichtlich der Längserstreckung des Rohrabschnitts seitlich erstreckt. Die Ausrichtung des Durchbruchs und/oder die Ausrichtung des Rohrabschnitts und/oder die Tiefenerstreckung des Sensorgehäuses verlaufen somit im Wesentlichen orthogonal zu der von Sendelichtpfad und/oder der Empfangslichtpfad aufgespannten Ebene.

Bei einer bevorzugten Ausgestaltung des erfindungsgemäßen optoelektrischen Sensors umfassen die Lichtempfangsmittel eine Sammellinse zum Bündeln der sich entlang des Empfangslichtpfads ausbreitenden Lichtsignale auf ein lichtsensitives Erfassungselement sowie das lichtsensitive Erfassungselement. Die Sammellinse ist hierbei in der Trägereinheit so positioniert und/oder ausgerichtet, dass in der Seitenansicht des Sensorgehäuses eine Senkrechte zum Sendelichtpfad sowohl durch den optischen Mittelpunkt, insbesondere den Masseschwerpunkt, der Sammellinse als auch im Wesentlichen durch den Mittelpunkt der Aufnahme verläuft.

Bevorzugt umfassen die Lichtempfangsmittel mehrere Linsen, insbesondere eine erste und eine zweite Sammellinse. Besonders bevorzugt umfassen die Lichtsendemittel eine optische Linse und/oder eine Lichtquelle, insbesondere eine LED oder eine Laserquelle.

Vorteilhaft kann somit verhindert werden, dass sich bei einer thermischen Ausdehnung der Trägereinheit die Lage der Sammellinse seitlich und/oder hinsichtlich einer Breitenerstreckung des Sensorgehäuses verschiebt, da sich eine thermische Ausdehnung der Trägereinheit insbesondere im Wesentlichen entlang einer Höhenerstreckung des Sensorgehäuses auswirken wird.

Anders ausgedrückt, die von Massenschwerpunkt der Sammellinse zum Mittelpunkt der Aufnahme aufgespannte Gerade ändert ihren Abstand zum zu erfassenden Objekt auch bei einer Wärmeausdehnung des Sensorgehäuses und/oder der Trägereinheit im Wesentlichen nicht oder nur minimal.

Weiterbildend ist es in diesem Zusammenhang vorgesehen, dass das lichtsensitive Erfassungselement eine Vielzahl lichtsensitiver Erfassungsbereiche aufweist. Diese Erfassungsbereiche sind zueinander unmittelbar benachbart angeordnet und relativ zur Sammellinse positioniert. die einzeln auswertbaren Erfassungsbereiche ermöglichen den Winkel des Empfangslichtpfads relativ zum Sendelichtpfad zu erfassen, um somit den Abstand des Objekts vom Sensor zu bestimmen.

Vorteilhaft lässt sich der erfindungsgemäße optoelektrische Sensor somit als ein Triangulationssensor ausbilden.

Bei einer bevorzugten Ausgestaltung ist die Trägereinheit nicht nur monolithisch und/oder einstückig ausgebildet, sondern auch aus einer Keramik oder aus einem Metall, insbesondere Stahl oder Aluminium, realisiert. Diese Materialien eigenen sich aufgrund der geringen thermischen Ausdehnungskoeffizienten im besonderen Maße zum Ausgestalten der erfindungsgemäßen Trägereinheit.

Weiterbildend ist es auch besonders bevorzugt, wenn das Sensorgehäuse aus einem Kunststoff ausgebildet ist. Ein Sensorgehäuse aus Kunststoff lässt sich zu geringen Kosten herstellen und ist nicht elektrisch leitend.

Zudem umfasst das Sensorgehäuse wenigstens eine Ein- und Austrittsfläche für die Lichtsignale. Bevorzugt ist die Ein- und Austrittsfläche zumindest teilweise in einer Vorderseite des Sensorgehäuses durch einen Fensterbereich ausgebildet. Besonders bevorzugt ist die Ein- und Austrittsfläche und/oder der Fensterbereich durch ein transparentes Element, bevorzugt durch ein transparentes Kunststoff- oder Glaselement, besonders bevorzugt durch ein in Bezug auf die Wellenlänge der Lichtsignale ausgelegtes Filterelement ausgebildet.

Bezüglich des Filterelements wird darauf hingewiesen, dass das Filterelement insbesondere nur im Wellenlängenbereich der erzeugten Lichtsignale transparent ausgebildet ist. Licht mit einer abweichenden Wellenlänge kann in diesem Zusammenhang nicht in das Sensorgehäuse eindringen.

Bei einer besonders bevorzugten Ausführungsform ist vorgesehen, dass der optische Sensor eine weitere Aufnahme zum Einführen eines weiteren Befestigungselements umfasst, um den optoelektrischen Sensor in dem Betriebszustand an dem externen Körper festzulegen und den Erfassungsbereich somit auf den zu überwachenden Bereich auszurichten.

Weiterbildend ist es in diesem Zusammenhang vorgesehen, dass die weitere Aufnahme in der Seitenansicht des Sensorgehäuses in einem Bereich des Sensorgehäuses ausgebildet ist, der sich innerhalb des Sensorgehäuses und in Bezug auf die Ausbreitungsrichtung der reflektierten Lichtsignale hinter den Lichtempfangsmitteln erstreckt. Die weitere Aufnahme ist insbesondere zumindest bereichsweise innerhalb des Innenraums ausgebildet und/oder durchdringt den Innenraum zumindest teilweise und/oder bereichsweise.

Weiterbildend ist es in diesem Zusammenhang vorgesehen, dass die weitere Aufnahme als ein den Innenraum vollständig durchdringender und/oder an den Innenraum unmittelbar angrenzender hülsenförmiger Rohrabschnitt ausgebildet ist. Anders ausgedrückt, die als hülsenförmiger Rohrabschnitt ausgebildete weitere Aufnahme durchdringt den Innenraum hinsichtlich einer Tiefenerstreckung des Sensorgehäuses vollständig.

Weiterbildend ist es in diesem Zusammenhang bevorzugt geplant, dass die weitere Aufnahme elastisch und/oder federnd ausgebildet ist, derart, dass das Sensorgehäuse zwischen der ersten und der weiteren Aufnahme zum Ausgleich thermisch induzierter Spannungen zwischen dem Sensorgehäuse und dem externen Körper flexibel und/oder hinsichtlich der Längenerstreckung des Sensorgehäuses zwischen den beiden Aufnahmen variabel ausgebildet ist.

Die Ausdehnung des Sensorgehäuses bei einer Temperaturänderung kann somit gezielt so beeinflusst werden, dass sich diese ausgehend von der ersten Aufnahme in Richtung der weiteren Aufnahme auswirkt.

Die zweite Aufnahme zeigt jedoch eine möglichst geringe Flexibilität in der Richtung orthogonal zu den von den zwei Aufnahmen aufgespannten Ebene, wobei die Ebene durch die jeweilige Mittelachse der beiden Aufnahmen aufgespannt wird.

Vorteilhaft kann somit eine negative Beeinflussung des Messergebnisses durch eine Verspannung und/oder eine Rotation um die erste Aufnahme des Sensorgehäuses mit einer negativen Auswirkung auf die Lichtsende- und Lichtempfangsmittel vermieden werden.

Weiterbildend ist es in diesem Zusammenhang vorgesehen, dass die weitere Aufnahme durch ein inneres und ein äußeres Hülsenelement ausgebildet ist, wobei das innere und das äußere Hülsenelement zueinander koaxial ausgerichtet und durch Stegelemente so voneinander beabstandet sind, dass sich das Sensorgehäuse entlang der Strecke zwischen der Aufnahme und der weiteren Aufnahme aufgrund eines zwischen den Stegelementen ausgebildeten freien Zwischenraums ausdehnen kann und wobei das innere Hülsenelement zur Aufnahme des Befestigungselements ausgebildet ist.

Im Folgenden ist die Erfindung beispielhaft mit Bezug auf die Zeichnungen näher erläutert. Die bei den gezeigten Ausführungsformen beispielhaft dargestellte Merkmalskombination kann nach Maßgabe der obigen Ausführungen entsprechend den für einen bestimmten Anwendungsfall notwendigen Eigenschaften des Erfindungsgegenstands durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt.

In den Zeichnungen sind Elemente gleicher Funktion und/oder gleichen Aufbaus mit demselben Bezugszeichen bezeichnet.

Es zeigen:
- Fig. 1:: eine schematische Darstellung eines erfindungsgemäßen optoelektrischen Sensors gemäß einer ersten Ausführungsvariante in einer Draufsicht;
- Fig. 2a/b:: eine schematische Darstellung eines erfindungsgemäßen optoelektrischen Sensors gemäß einer zweiten Ausführungsvariante in einer Draufsicht;
- Fig. 3:: eine schematische Explosionsdarstellung eines Sensorgehäuses und einer Trägereinheit gemäß einer dritten Ausführungsvariante des erfindungsgemäßen optoelektrischen Sensors und
- Fig. 4a/b: schematische Darstellungen des erfindungsgemäßen optoelektrischen Sensors für eine Nahbereich- und eine Fernbereichsüberwachung jeweils im Betriebszustand.

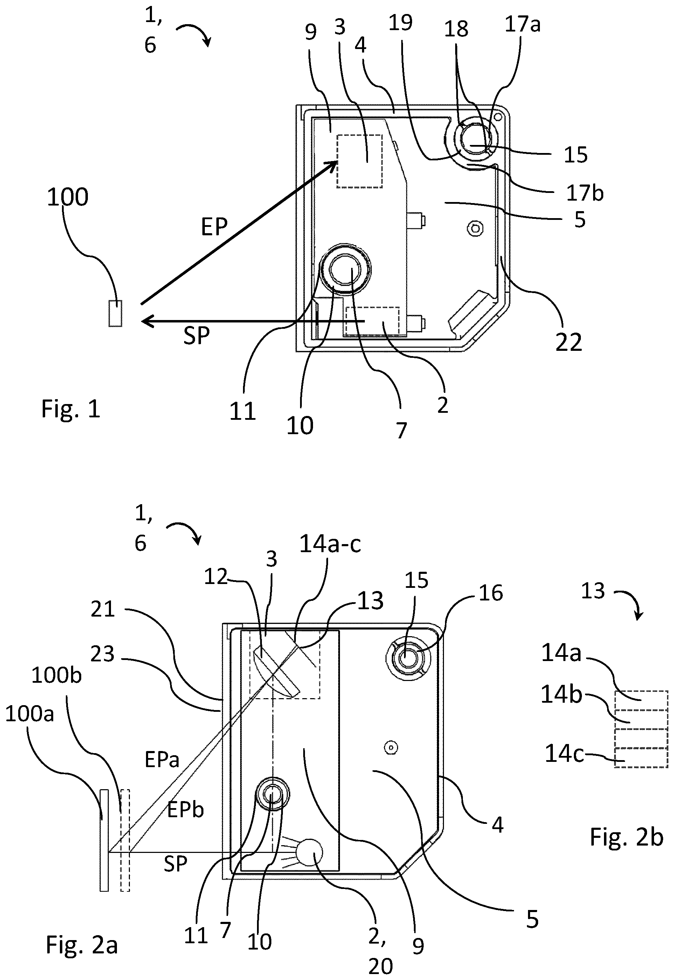

Die Fig. 1 zeigt eine Seitenansicht eine bevorzugte Ausführungsform des erfindungsgemäßen optoelektrischen Sensors 1 in einem Auslieferzustand 6, wobei der optoelektrische Sensor 1 zum Erfassen von Objekten 100 in einem Erfassungsbereich ausgebildet ist.

Der erfindungsgemäße Sensor 1 umfasst Lichtsendemittel 2. Die erfindungsgemäßen Lichtsendemittel 2 sind zum Aussenden von Lichtsignalen ausgebildet. Die Lichtsignale bereiten sich entlang eines Sendelichtpfads SP auf den Erfassungsbereich aus, um ein Objekt 100, das sich innerhalb des Erfassungsbereichs befindet, zu erfassen.

Für den Fall, dass sich ein Objekt 100 im Erfassungsbereich befindet, werden die Lichtsignale am Objekt 100 reflektiert und/oder remittiert. Ein Teil dieser Lichtsignale trifft somit wieder auf den Sensor 1.

Ferner umfasst der erfindungsgemäße Sensor 1 Lichtempfangsmittel 3 zum Erfassen von den reflektierten Lichtsignalen, die sich entlang eines Empfangslichtpfads EP vom Objekt 100 in Richtung des Sensors 1 ausbreiten.

Weiterhin umfasst der erfindungsgemäße Sensor 1 ein Sensorgehäuse 4. Das erfindungsgemäße Sensorgehäuse 4 umfasst eine Wandung 22 und umschließt somit einen Innenraum 5 zum Aufnehmen einer Trägereinheit 9. Die Trägereinheit 9 nimmt die Lichtsendemittel 2 und die Lichtempfangsmittel 3 auf und richtet diese zueinander aus.

Weiterhin umfasst der Sensor 1 eine Aufnahme 7, die zum Einführen und Aufnehmen eines nicht dargestellten Befestigungselements 102 ausgebildet ist, um den erfindungsgemäßen Sensor 1 in einem Betriebszustand 8 an einem externen Körper 101 festzulegen und den Erfassungsbereich auf einen zu überwachenden Bereich auszurichten.

Das Sensorgehäuse 4 umfasst einen Rohrabschnitt 10, der hülsenförmig ausgebildet ist und das Sensorgehäuse 4 in Bezug auf eine in die Figurenebene verlaufende Tiefenerstreckung TE im Bereich des Innenraums 5 vollständig durchsetzt.

Der hülsenförmige Rohrabschnitt 10 ist von der Wandung 22 des Sensorgehäuses 4 beabstandet und/oder durch separate Gehäuseelemente ausgebildet.

Im vorliegenden Ausführungsbeispiel umfasst der Rohrabschnitt 10 einen inneren und einen äußeren runden Querschnitt. Der innere Durchmesser, der als ein Durchgangsloch ausgebildet ist, ist dazu eingerichtet, ein längliches Befestigungselement in Form einer Schraube oder eines Bolzens aufzunehmen.

Ferner umfasst die erfindungsgemäße Trägereinheit 9 einen umfangsseitig geschlossenen Durchbruch 11, der in einem Auslieferzustand 6 des Sensors 1 unmittelbar benachbart zum Rohrabschnitt 10 angeordnet ist.

Der Durchbruch 11 ist im vorliegenden Ausführungsbeispiel durch eine Bohrung realisiert.

Die Innenfläche des Durchbruchs 11 und/oder die Mantelfläche der Bohrung der Trägereinheit 9 und die Außenfläche und/oder Mantelfläche des Rohrabschnitts 10 sind im Auslieferzustand 6, der in der Fig. 1 dargestellt ist, unmittelbar zueinander benachbart angeordnet und/oder mechanisch kontaktiert. Anders ausgedrückt, der Durchbruch 11 und der Rohrabschnitt 10 bilden im Wesentlichen eine Formschlussverbindung aus, die sämtliche Freiheitsgrade und/oder Bewegungsachsen bis auf einen rotatorischen Freiheitsgrad fixiert. Zum Vermeiden einer Relativbewegung zwischen dem Sensorgehäuse und der Trägereinheit 9 bezüglich der Tiefenerstreckung des Sensorgehäuses, die senkrecht zur Figurenebene verläuft, erfolgt insbesondere eine zusätzliche Sicherung mittels eines nicht im Detail dargestellten Sicherungselements, insbesondere einer mit dem Rohrabschnitt zusammenwirkenden Mutter oder einer Schraube. Alternativ ist es insbesondere auch vorgesehen, dass eine Fixierung der Trägereinheit 9 am Sensorgehäuse mittels Klebemitteln erfolgt. Bevorzugt sollte jede Fixierung nah am gemeinsamen Fixierungspunkt vom Sensorgehäuse und der Trägereinheit realisiert werden.

Die Trägereinheit 9 besteht im vorliegenden Ausführungsbeispiel aus einem Metall und ist monolithisch ausgebildet.

Weiterhin geht aus der Fig. 1 hervor, dass der erfindungsgemäße Sensor 1 eine weitere Aufnahme 15 zum Aufnehmen eines weiteren Befestigungselements umfasst. Der Sensor 1 lässt sich somit über die erste Aufnahme 7 und die weitere Aufnahme 15 an einem externen Körper festlegen.

Die weitere Aufnahme 15 ist in Bezug auf eine thermische Ausdehnung des Sensorgehäuses 4 flexibel ausgebildet. Konkret wird dies im vorliegenden Ausführungsbeispiel dadurch realisiert, dass die weitere Aufnahme 15 durch ein inneres Hülsenelement 17a und ein äußeres Hülsenelement 17b ausgebildet ist.

Das innere Hülsenelement 17a und das äußere Hülsenelement 17b umfassen einen runden Querschnitt mit unterschiedlichem Durchmesser.

Das innere Hülsenelement 17a und das äußere Hülsenelement 17b sind zueinander koaxial ausgerichtet und über Stegelemente 18 so voneinander beabstandet, dass im Bereich der weiteren Aufnahme 15 und endseitig der Strecke zwischen der ersten Aufnahme 7 und der weiteren Aufnahme 15 ein freier Zwischenraum 19 zwischen den Stegelementen 18 und den sich gegenüberliegenden freien Mantelflächen der beiden Hülsenelemente 17a/b ausgebildet ist, derart, dass sich das Sensorgehäuse 4 entlang dieser Strecke durch den freien Zwischenraum 19 zum Ausgleich thermisch induzierter Spannungen ausdehnen kann.

Die thermische Ausdehnung des Sensorgehäuses 4 kann sich somit gezielt derart ausbilden, dass es nicht zu einer negativen Beeinflussung des Messergebnisses des Sensors 1 kommt.

Die Fig. 2a zeigt einen erfindungsgemäßen optoelektrischen Sensor 1 im Auslieferzustand 6 gemäß einer zweiten Ausführungsvariante.

Der Sensor 1 umfasst gemäß des ersten Ausführungsbeispiels ein Sensorgehäuse 4, wobei die Aufnahme 7 durch einen hülsenförmigen Rohrabschnitt 10 mit rundem Querschnitt ausgebildet ist.

Die Lichtsendemittel 2 des optoelektrischen Sensors 1 gemäß der zweiten Ausführungsvariante sind durch eine Laser-Quelle 20 realisiert. Die Laser-Quelle 20 sendet Lichtsignale auf den Erfassungsbereich aus, der sich in der figürlich dargestellten Draufsicht auf den Sensor 1 in einem linken Bereich der Figurenebene erstreckt.

Die Laser-Quelle 20 wird zusammen mit den Lichtempfangsmitteln 3 von einer erfindungsgemäßen Trägereinheit 9 aufgenommen.

Die monolithische Trägereinheit 9, die aus einem keramischen Material mit einem geringen thermischen Ausdehnungskoeffizienten ausgebildet ist, erstreckt sich in einem vorderen Teilbereich des vom Sensorgehäuse 4 ausgebildeten Innenraums 5. Ferner umfasst die keramische Trägereinheit 9 zum Ausbilden der Aufnahme 7 einen umfangsseitig geschlossenen Durchbruch 11, der vorliegend einen runden Querschnitt umfasst.

Der Durchbruch 11 ist so dimensioniert, dass der Rohrabschnitt 10 gerade vom Durchbruch 11 aufgenommen werden kann. Ferner ist der Rohrabschnitt 10 so dimensioniert, dass ein Befestigungselement 102, insbesondere eine Schraube, gerade aufgenommen werden kann.

An einer Vorderseite 21 des Sensorgehäuse 4 durchdringen die Lichtsignale das Sensorgehäuse 4 innerhalb eines Fensterbereichs 23. Der Fensterbereich 23 ist aus einem transparenten Material ausgebildet, um für die Lichtsignale durchlässig zu sein.

Die Lichtempfangsmittel 3 des Sensors 1 gemäß der zweiten Ausführungsvariante umfassen eine Sammellinse 12, die so in sämtlichen Empfangslichtpfaden EPa/b angeordnet ist, dass Lichtsignale, die an einem Objekt reflektiert wurden und auf die Sammellinse 12 auftreffen, auf ein lichtsensitives Erfassungselement 13 gebündelt werden. Das lichtsensitive Erfassungselement 13 ist dazu eingerichtet, in Abhängigkeit der Intensität der auftreffenden Lichtsignale zumindest ein Messignal zu erzeugen.

Vorliegend umfasst das lichtsensitive Erfassungselement 13 eine Vielzahl von lichtsensitiven Erfassungsbereichen 14a-c, die jeweils zum Detektieren von auftreffenden Lichtsignalen ausgebildet sind. Die Vielzahl der lichtsensitiven Erfassungsbereiche 14a-c sind zueinander unmittelbar benachbart angeordnet und erstrecken sich in einer Erfassungsebene (vgl. hierzu auch eine stark schematisierte Draufsicht auf die Erfassungsebene des vorliegenden Erfassungselements gemäß der Fig. 2b).

Die individuelle Auswertung der Erfassungsbereiche 14a-c ermöglicht die Ausrichtung des Empfangslichtpfads in Bezug auf den Sendelichtpfad zu bestimmen. Somit lässt sich der Abstand eines Objekts 100a/b vom Sensor 1 ermitteln.

Ferner wird darauf hingewiesen, dass in der Fig. 2a im Erfassungsbereich des erfindungsgemäßen Sensors 1 zwei zu detektierende Objekte 100a/b an unterschiedlichen Positionen positioniert sind.

Aus den skizzierten Verläufen der Lichtsignale geht hervor, dass sich für die beiden Objekte 100a/b bei einem identischen Sendelichtpfad SP jeweils ein individueller Empfangslichtpfade EPa/b ergibt. Die Lichtsignale beider Empfangslichtpfade EPa/b treffen auf die Sammellinse 12 und führen zu einer Änderung der relativen Intensitätsverteilung der Erfassungsbereiche 14a/b, was messtechnisch erfassbar ist.

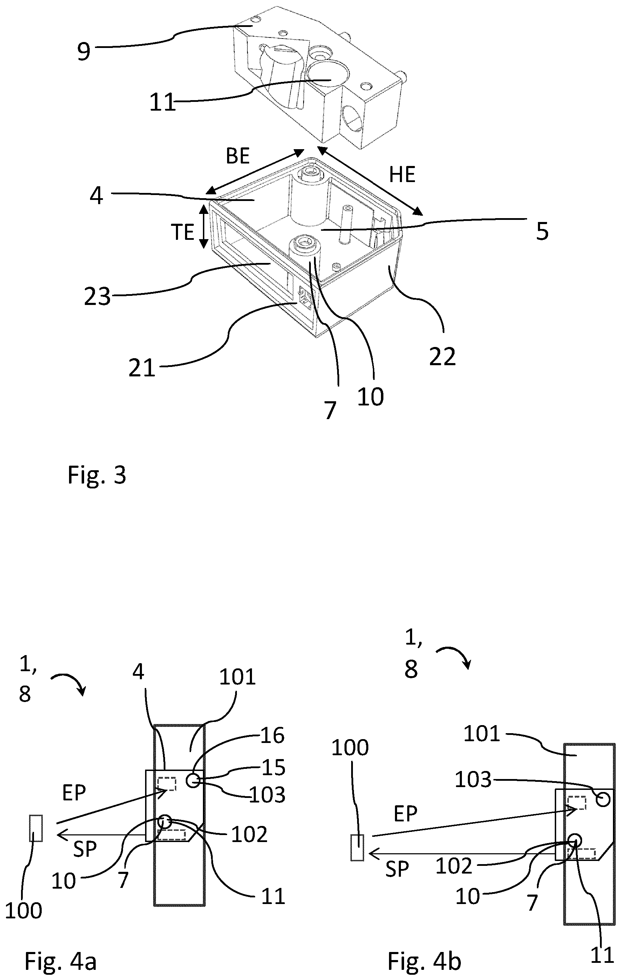

Ferner umfasst auch der Sensor 1 gemäß der zweiten Ausführungsvariante eine weitere Aufnahme 15. Vorliegend ist die weitere Aufnahme 15 durch einen hülsenförmigen Rohrabschnitt 16 mit rundem Querschnitt ausgebildet, der das Sensorgehäuse 4 im Bereich des Innenraums 5 hinsichtlich der Tiefenerstreckung TE (vgl. Fig. 3) des Sensors 1 vollständig durchsetzt.

Dieser Rohrabschnitt 16, befindet sich in einem Bereich des Sensorgehäuses 4, der hinter dem Trägereinheit9 liegt.

Ferner befindet sich der weitere Rohrabschnitt 16 in einem Bereich des Innenraums 5, in dem sich die Trägereinheit 9 nicht erstreckt. Anders ausgedrückt, die erfindungsgemäße Trägereinheit 9 steht nur mit dem ersten Rohrabschnitt 10 in Wirkkontakt.

Die Fig. 2b zeigt stark schematisiert die vom lichtsensitiven Erfassungselement 13 ausgebildete Erfassungsebene, die durch die Vielzahl der lichtsensitiven Erfassungsbereiche 14a-c ausgebildet ist. Die Erfassungsbereiche 14a-c, sind zueinander unmittelbar benachbart angeordnet und können in der Anzahl stark variieren.

Die Fig. 3 zeigt das Sensorgehäuse 4 sowie die Trägereinheit 9 eines erfindungsgemäßen optoelektrischen Sensors 1 gemäß einer weiteren, hinsichtlich der bereits beschriebenen Ausführungsformen geringfügig modifizierten Ausführungsvariante in einer Explosionsansicht.

Das Sensorgehäuse 4 wird durch die Wandung 22 ausgebildet, die den Innenraum 5 umschließt und/oder definiert.

Ferner geht aus der Darstellung hervor, dass der hülsenförmige Rohrabschnitt 10, der die Aufnahme 7 zum Aufnehmen des Befestigungselements ausbildet, als freistehende Komponente im Bereich des Innenraums 5 und somit von der Wandung 22, die den Innenraum 5 umschließt und/oder definiert, beabstandet ist.

Zudem ist erkennbar, dass das Sensorgehäuse 4 an der Vorderseite 21 eine Öffnung zum Ausbilden des Fensterbereichs 23 umfasst. Im Auslieferzustand und/oder Betriebszustand ist die Öffnung durch ein transparentes Element, das für die Lichtsignale durchlassend ausgebildet ist, abgedeckt.

Ferner geht aus der Darstellung hervor, dass das Sensorgehäuse 4 eine seitliche Montageöffnung 24 umfasst, die in der grafischen Darstellung nach oben Ausgerichtet ist und die von einem nicht dargestellten Verkleidungselement, das die vollständige Gehäuseseite des Sensors 1 ausbildet, verschließbar ist.

Aus der Darstellung wird nun auch ersichtlich, dass die erfindungsgemäße Trägereinheit 9 Ausnehmungen umfasst, um die nicht dargestellten Lichtsendemittel 2 und die Lichtempfangsmittel 3 aufzunehmen. Ferner wird auch eine Ausnehmung zum Aufnehmen einer Sammellinse sichtbar, um die Lichtsignale auf das lichtsensitive Element zu bündeln.

Ferner ist in der vorliegenden Darstellung der umfangsseitig geschlossene Durchbruch 11 erkennbar, der so dimensioniert ist, dass der als separate Komponente im Innenraum 5 ausgebildete Rohrabschnitt 10 in den Durchbruch 11 einführbar und somit dort positionierbar ist.

Der Durchbruch 11 der Trägereinheit 9 ist vorliegend als eine Bohrung mit rundem Querschnitt ausgebildet. Der Durchmesser der Bohrung ist so gewählt, dass im Auslieferzustand des Sensors 1 der Rohrabschnitt 10 gerade in den Durchbruch 11 passt. Vorteilhaft kann somit über ein Befestigungselement sowohl die Trägereinheit 9 als auch das Sensorgehäuse 4 fixiert werden.

Ferner wird darauf hingewiesen, dass die Trägereinheit 9 durch eine Serie von Trägereinheiten 9 mit jeweils unterschiedlicher Position und/oder Ausrichtung der Lichtempfangsmittel 3 realisierbar ist. Konkret unterscheiden sich die verschiedenen Trägereinheiten 9 in der Ausrichtung der von den Lichtempfangsmitteln 3 umfassten Sammellinse 12. Vorteilhaft kann somit ein erfindungsgemäßer optoelektrischer Sensor entweder für den Nahbereich (vgl. insb. die Fig. 4a) oder für den Fernbereich (vgl. insb. die Fig. 4b) optimiert werden.

Weiterhin geht aus der Fig. 3 die Ausrichtung der Dimensionsmaße des Sensorgehäuses 4 - und somit des erfindungsgemäßen Sensors 1 - hervor, das sich aus der Tiefenerstreckung TE, der Höhenerstreckung HE und der Breitenerstreckung BE zusammensetzt.

Die Fig. 4a/b zeigen zwei unterschiedliche bevorzugte Ausgestaltungen des erfindungsgemäßen optoelektrischen Sensors 1 jeweils im Betriebszustand 8.

Im Betriebszustand 8 bedeutet, dass der erfindungsgemäße optoelektrische Sensor 1 durch zwei Befestigungselemente 102/103 an einem externen Körper 101 so festgelegt ist, dass der Erfassungsbereich des Sensors 1 auf den zu überwachenden Bereich ausgerichtet ist.

Konkret bedeute dies, dass ein erstes Befestigungselement 102 im hülsenförmigen Rohrabschnitt 10 angeordnet ist, das den Sensor 1 somit am externen Körper 101 fixiert. Ferner ist ein weiteres Befestigungselement 103 in der weiteren Aufnahme 15 angeordnet, wobei die weitere Aufnahme 15 auch hier durch einen weiteren hülsenförmigen Rohrabschnitt 16 ausgebildet ist.

Das Ausführungsbeispiel des optoelektrischen Sensors 1 gemäß der Fig. 4a ist für eine Nahbereichsüberwachung ausgebildet und das Ausführungsbeispiel des optoelektrischen Sensors 1 gemäß der Fig. 4b ist für eine Fernbereichsüberwachung eingerichtet.

Realisiert wird dies durch zwei unterschiedliche Trägereinheiten 9, die eingerichtet sind entweder zum Empfangen von Lichtsignalen unter einem großen Winkelbereich zwischen dem Sendelichtpfad SP und dem Empfangslichtpfad EP zum Realisieren einer Nahbereichsüberwachung oder unter einem kleinen Winkelbereich zwischen dem Sendelichtpfad SE und dem Empfangslichtpfad EP zum Realisieren der Fernbereichsüberwachung.

Vorteilhaft lässt sich der erfindungsgemäße Sensor 1 somit einfach an unterschiedliche Anwendungsfälle anpassen, wobei sich die Komponenten bis auf die Trägereinheit 9 nicht voneinander unterscheiden.

## Patentansprüche

1. Optoelektrischer Sensor (1), insbesondere Triangulationssensor, zum Erfassen von Objekten (100) in einem Erfassungsbereich, aufweisend
- Lichtsendemittel (2), die so ausgebildet sind, dass Lichtsignale entlang eines Sendelichtpfads (SP) auf den Erfassungsbereich aussendbar sind;
- Lichtempfangsmittel (3), die so ausgebildet sind, dass an einem Objekt (100) im Erfassungsbereich reflektierte und sich entlang eines Empfangslichtpfads (EP) ausbreitende Lichtsignale erfassbar sind;
- ein Sensorgehäuse (4), das einen Innenraum (5) zum Aufnehmen der Lichtsendemittel (2) und der Lichtempfangsmittel (3) in einem Auslieferzustand (6) ausbildet, wobei das Sensorgehäuse (4) eine Aufnahme (7) für ein Befestigungselement (102) umfasst, um den optoelektrischen Sensor (1) in einem Betriebszustand (8) an einem externen Körper (101) festzulegen;
**gekennzeichnet durch** eine im Auslieferzustand (6) im Innenraum (5) angeordnete Trägereinheit (9) zum Aufnehmen und Ausrichten der Lichtsendemittel (2) und der Lichtempfangsmittel (3), wobei die gehäuseseitige Aufnahme (7) als ein den Innenraum (5) vollständig durchdringender hülsenförmiger Rohrabschnitt (10) ausgebildet ist, die Trägereinheit (9) einen umfangsseitig geschlossenen Durchbruch (11) umfasst und im Betriebszustand (8) der Rohrabschnitt (10) innerhalb des Durchbruchs (11) angeordnet ist, um das Befestigungselement (102) im Rohrabschnitt (10) und somit innerhalb des Durchbruchs (11) anzuordnen.

2. Optoelektrischer Sensor nach Anspruch 1,
**dadurch gekennzeichnet,**
**dass** der Rohrabschnitt (10) und/oder der Durchbruch (11) einen im Wesentlichen kreisförmigen Querschnitt umfasst, wobei im Auslieferzustand (6) der Rohrabschnitt (10) und der Durchbruch (10) zueinander koaxial ausgebildet sind.

3. Optoelektrischer Sensor nach einem der vorgenannten Ansprüche,
**dadurch gekennzeichnet,**
**dass** die Lichtempfangsmittel (3) eine Sammellinse (12) zum Bündeln der sich entlang des Empfangslichtpfads (EP) ausbreitenden Lichtsignale auf ein lichtsensitives Erfassungselement (13) sowie das lichtsensitive Erfassungselement (13) aufweisen, wobei die Sammellinse (2) in der Trägereinheit (9) so positioniert und/oder ausgerichtet ist, dass in der Seitenansicht des Sensorgehäuses (4) eine senkrechte zum Sendelichtpfad (SP) sowohl durch den optischen Mittelpunkt, insbesondere den Masseschwerpunkt, der Sammellinse (12) als auch im Wesentlichen durch den Mittelpunkt der Aufnahme (7) verläuft.

4. Optoelektrischer Sensor nach Anspruch 3,
**dadurch gekennzeichnet,**
**dass** das lichtsensitive Erfassungselement (13) eine Vielzahl lichtsensitiver Erfassungsbereiche (14a-c) umfasst, die zueinander unmittelbar benachbart angeordnet sind, um die Ausrichtung des Empfangslichtpfads relativ zum Sendelichtpfad zu erfassen und somit den Abstand des Objekts (100) vom Sensor (1) zu bestimmen.

5. Optoelektrischer Sensor nach einem der vorgenannten Ansprüche,
**dadurch gekennzeichnet,**
**dass** die Trägereinheit (9) monolithisch und/oder einstückig ausgebildet ist und/oder dass die Trägereinheit (9) aus einer Keramik oder aus einem Metall, insbesondere Stahl oder Aluminium, ausgebildet ist und/oder
**dass** das Sensorgehäuse (4) aus einem Kunststoff ausgebildet ist.

6. Optoelektrischer Sensor nach einem der vorgenannten Ansprüche,
**dadurch gekennzeichnet,**
**dass** der optoelektrische Sensor (1) eine weitere Aufnahme (15) zum Einführen eines weiteren Befestigungselements (103) umfasst, um den optoelektrischen Sensor (1) in dem Betriebszustand (8) an dem externen Körper (101) festzulegen und den Erfassungsbereich somit auf den zu überwachenden Bereich auszurichten.

7. Optoelektrischer Sensor nach Anspruch 6,
**dadurch gekennzeichnet,**
**dass** in der Seitenansicht des Sensorgehäuses (4) die weitere Aufnahme (15) in einem Bereich des Sensorgehäuses (4) ausgebildet ist, der hinsichtlich des Verlaufs der Lichtsignale entlang des Empfangslichtpfads (EP) hinter den Lichtempfangsmitteln (3) angeordnet ist.

8. Optoelektrischer Sensor nach Anspruch 6 oder 7,
**dadurch gekennzeichnet,**
**dass** die weitere Aufnahme (15) als ein den Innenraum (5) vollständig durchdringender und/oder an den Innenraum (5) unmittelbar angrenzender weiterer hülsenförmiger Rohrabschnitt (16) ausgebildet ist.

9. Optoelektrischer Sensor nach einem der Ansprüche 6 bis 8,
**dadurch gekennzeichnet,**
**dass** die weitere Aufnahme (15) elastisch und/oder federnd ausgebildet ist, derart, dass das Sensorgehäuse (4) zwischen der ersten Aufnahme (7) und der weiteren Aufnahme (15) zum Ausgleich thermisch induzierter Spannungen zwischen dem Sensorgehäuse (4) und dem externen Körper (101) flexibel ist.

10. Optoelektrischer Sensor nach einem der Ansprüche 6 bis 9,
**dadurch gekennzeichnet,**
**dass** die weitere Aufnahme (15) durch ein inneres und ein äußeres Hülsenelement (17a/b) ausgebildet ist, wobei das innere und das äußere Hülsenelement (17a/b) zueinander koaxial ausgerichtet und durch Stegelemente (18) so voneinander beabstandet sind, dass sich das Sensorgehäuse (4) entlang der Strecke zwischen der Aufnahme (7) und der weiteren Aufnahme (15) aufgrund eines zwischen den Stegelementen (18) ausgebildeten freien Zwischenraums (19) ausdehnen kann und wobei das innere Hülsenelement (17a) zur Aufnahme des weiteren Befestigungselements (103) ausgebildet ist.
